# FASCICULE DE BREVET EUROPEEN

(11) **EP 0 426 544 B1**
(45) Date de publication et mention de la délivrance du brevet: **27.08.1997**
(21) Numéro de dépôt: 90403027.7
(22) Date de dépôt: 26.10.1990
(51) Int. Cl.: G06K 19/06, G07F 7/08

(54) **Procédé de protection contre l'inhibition non autorisée d'écriture de certaines zones de mémoire d'une carte à microprocesseur, et dipositif de mise en oeuvre**
Schutzverfahren um das Abspeichern eines nichtautorisierten Schreibens auf bestimmte Speicherzonen einer Mikroprozessorkarte zu verhindern und Anlage für die Ausführung
Method of protection against inhibition of non-authorised writing over specific memory zone of a microprocessor card and device for application

(30) Priorité: 03.11.1989 FR 8914417
(43) Date de publication de la demande: 08.05.1991
(73) Titulaire: LABORATOIRE EUROPEEN DE RECHERCHES ELECTRONIQUES AVANCEES, 92400 Courbevoie (FR)
(72) Inventeur: Diehl, Eric, F-92045 Paris la Défense (FR); Hamon, Joel, F-92045 Paris la Défense (FR); Leduc, Michel, F-92045 Paris la Défense (FR)
(74) Mandataire: Ruellan-Lemonnier, Brigitte

(56) Documents cités:
- FR-A- 2 606 199
- US-A- 3 906 460

## Description

La présente invention se rapporte à un procédé de protection contre l'inhibition non autorisée d'écriture de certaines zones de mémoire d'une carte à microprocesseur, et à un dispositif de mise en oeuvre.

Dans un réseau de télévision à péage dont les décodeurs utilisent des cartes à microprocesseur, l'émetteur envoie, à la fin de la période de validité des cartes ou s'il s'aperçoit qu'il faut inhiber définitivement des cartes contrefaites (ayant toutes la même identité par suite d'une contrefaçon à l'identique), un signal commandant l'inscription dans ces cartes d'une donnée de fin de validité et/ou inhibant tout accès à la carte. La tension d'écriture d'une telle carte apparaît sur un conducteur déterminé du décodeur qu'un "pirate" peut facilement repérer (en général, il s'agit d'un conducteur sur lequel est présente une tension supérieure à la tension d'alimentation de service de la carte). Il suffit alors de couper ce conducteur pour empêcher la dévalidation de la carte.

Une solution connue, préconisée par la norme Eurocrypt actuelle, consiste à réserver dans la mémoire de la carte une zone dans laquelle sont inscrites les dates de début et de fin de validité de la carte, un programme commandant l'auto-destruction de la carte lorsque la période de validité de la carte est écoulée (l'émetteur communique constamment à la carte la date courante). La mémorisation de telles données dans la carte entraîne une diminution non négligeable de sa capacité de mémorisation, et de la capacité de transmission de données du réseau.

La présente invention a pour objet un procédé, simple et facile à mettre en oeuvre, de protection contre l'inhibition non autorisée d'écriture de certaines zones de la mémoire d'une carte à microprocesseur utilisée dans un réseau comportant au moins un centre de gestion ou émetteur et au moins un terminal ou récepteur comprenant des moyens coopérant avec des cartes à microprocesseur.

La présente invention a également pour objet un dispositif de mise en oeuvre du procédé, simple et peu onéreux.

Le procédé de l'invention est défini par la revendication 1. Ainsi, si quelqu'un venait à couper le fil d'amenée de tension d'écriture de la carte, ou à bloquer d'une quelconque manière l'écriture de cette carte, ce fait pourrait être détecté rapidement. Cette détection peut par exemple entraîner le blocage de toute transaction ultérieure de la carte.

Le dispositif de l'invention est défini par la revendication 5.

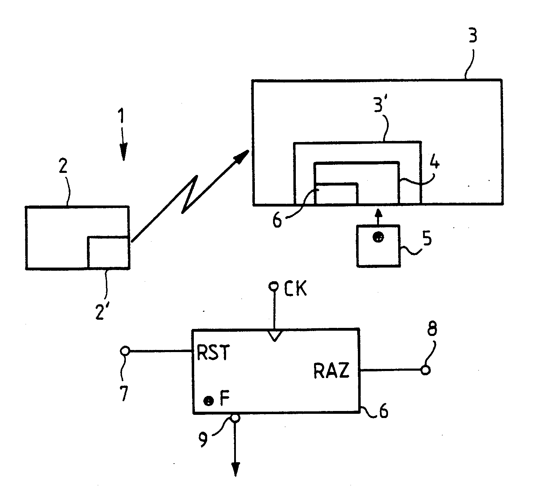

La présente invention sera mieux comprise à la lecture de la description détaillée d'un mode de réalisation, pris comme exemple non limitatif et illustré par le dessin annexé dont la figure unique est un bloc-diagramme simplifié d'un réseau conforme à l'invention.

L'invention est décrite ci-dessous en référence à un réseau de télévision à péage, mais il est bien entendu qu'elle n'est pas limitée à une telle application, et qu'elle peut s'appliquer à tout réseau du type comportant au moins un centre de gestion, de contrôle ou émetteur (appelé ici, pour simplifier, centre de gestion) et au moins un terminal ou récepteur (appelé ici, pour simplifier, terminal), relié au centre de gestion par tout moyen approprié (câble, ondes radio, faisceau hertzien...), ce terminal étant muni d'un dispositif lecteur de cartes à microprocesseur ("smart card").

Les cartes à microprocesseur utilisées dans un tel réseau ont généralement une durée de validité limitée (un ou plusieurs mois), en particulier afin de limiter tous risques de contrefaçon ou de "piratage".

Le réseau 1 de télévision à péage, représenté de façon simplifiée sur la figure unique du dessin, comporte un émetteur de programmes 2 et un grand nombre de récepteurs. Un seul de ces récepteurs, référencé 3, a été représenté sur le dessin. Le récepteur 3 comporte, en plus de ses circuits habituels, dans son décodeur 3', un lecteur 4 de cartes à microprocesseur. Une telle carte, référencée 5 a été représentée sur le dessin.

Afin de déterminer dans le décodeur si un utilisateur mal intentionné n'a pas bloqué l'arrivée de la tension d'écriture (en général une tension continue de 15 ou 21 V) de la carte utilisée, on fait produire par un circuit 2' de l'émetteur 2 (ce circuit 2' peut faire partie des circuits de cryptage de l'émetteur 2) un signal répétitif (ayant une période de 2 à 4s par exemple) qui doit être inscrit dans une zone déterminée de la mémoire de la carte 5. Ce signal répétitif peut par exemple être un simple bit "O" ou "1", dont la valeur est déterminée par un générateur pseudo-aléatoire. La zone déterminée peut comporter plusieurs emplacements différents choisis aléatoirement, afin de rendre la détection de cette inscription plus difficile.

Dans la carte 5, un compteur 6, recevant sur son entrée de signaux d'horloge CK des signaux d'horloge utilisés pour le microprocesseur de cette carte, réalise la détection de la présence de la tension d'écriture de la mémoire de cette carte. L'entrée 7 d'initialisation du compteur 6 reçoit, à la mise sous tension de la carte 5 (lors de son introduction dans le lecteur 4) un signal mettant à zéro ce compteur. L'entrée 8 de remise à zéro du compteur 6 reçoit la tension d'écriture de la carte, éventuellement divisée selon un rapport approprié (pour la ramener à 5V par exemple). La sortie 9 de débordement ("overflow") du compteur 6 est reliée à l'entrée de commande d'un circuit d'inhibition de lecture de la carte 5 ou de blocage quelconque de cette carte (par exemple une porte interposée dans le circuit d'alimentation du microprocesseur de la carte).

L'état de comptage maximal du compteur 6 est tel qu'il corresponde à, par exemple une ou deux périodes dudit signal répétitif. Ainsi, si l'écriture de la mémoire de la carte 5 (commandée par ce signal répétitif) a lieu normalement, le compteur 6 est remis à zéro (entrée 8) par l'écriture du signal répétitif, et n'atteint jamais son état maximal de comptage. Sinon, il atteint cet état maximal de comptage, et un signal de débordement apparaît à sa sortie 9 et bloque le fonctionnement de la carte 5.

## Revendications

1. Procédé de protection contre l'inhibition non autorisée d'écriture de certaines zones de mémoire d'une carte à microprocesseur utilisée dans un réseau comportant au moins un centre de gestion (2) et au moins un terminal (3) relié à ce centre de gestion, ledit terminal comportant un lecteur de carte à puce, caractérisé en ce qu'il comprend les étapes :
- d'envoi périodique d'une donnée quelconque à inscrire à au moins un emplacement de la mémoire de la carte,
- de détection de la présence périodique de la tension d'écriture correspondant à ladite donnée, la tension d'écriture détectée dans la carte provenant dudit terminal.

2. Procédé selon la revendication 1, caractérisé en ce qu'il comprend en outre l'étape d'inhibition de la carte au cas où la présence de la tension d'écriture n'est pas détectée périodiquement.

3. Procédé selon l'une des revendications 1 ou 2, caractérisé en ce que ladite détection de la présence d'une tension d'écriture est réalisée par un compteur, ledit compteur étant remis à zéro par ladite tension d'écriture.

4. Procédé selon l'une des revendications 1 à 3, caractérisé en ce que ledit au moins un emplacement est choisi aléatoirement.

5. Dispositif de protection contre l'inhibition non autorisée d'écriture de certaines zones de mémoire d'une carte à microprocesseur utilisée dans un réseau comportant au moins un centre de gestion (2) et au moins un terminal (3) relié à ce centre de gestion, ledit terminal comportant un lecteur de carte à microprocesseur, le dispositif comprenant au moins ledit centre de gestion (2), au moins ledit terminal (3) relié à ce centre de gestion, ledit terminal comportant ledit lecteur de carte à microprocesseur, et au moins ladite carte à microprocesseur, caractérisé en ce que
le centre de gestion comporte des moyens (2') de production périodique d'une information à inscrire dans la carte, ainsi que des moyens de transmission de ladite information,
ledit terminal comprenant des moyens de production d'une tension d'écriture,
ladite carte comprenant des moyens de détection (6) périodique de la tension d'écriture utilisée pour inscrire ladite donnée.

6. Dispositif selon la revendication 5, caractérisé en ce que ladite carte comprend en outre des moyens d'inhibition de ladite carte reliés aux moyens de détection.

7. Dispositif selon la revendication 6, caractérisé en ce que lesdits moyens d'inhibition comportent une porte interposée dans le circuit d'alimentation du microprocesseur de ladite carte.

8. Dispositif selon l'une des revendications 5 à 7, caractérisé en ce que lesdits moyens de détection comportent un compteur (6) dont l'entrée de remise à zéro reçoit la tension d'écriture de la carte (8).

9. Dispositif selon la revendication 8, caractérisé en ce que ledit compteur est alimenté par des signaux d'horloge prélevés dans la carte.

10. Dispositif selon l'une des revendications 5 à 9, caractérisé en ce que ledit terminal comporte un récepteur et un décodeur de télévision à péage.

## Patentansprüche

1. Schutzverfahren gegen das unberechtigte Sperren des Beschreibens gewisser Speicherzonen einer Mikroprozessorkarte, die in einem Netz mit mindestens einem Verwaltungszentrum (2) und mindestens einem mit diesem Verwaltungszentrum verbundenen Endgerät (3) verwendet wird, wobei das besagte Endgerät einen Chipkartenleser umfaßt, gekennzeichnet durch folgende Schritte:
- periodisches Senden irgendwelcher Daten zum Beschreiben von mindestens einer Stelle des Speichers der Karte,
- Erfassen des periodischen Vorhandenseins der den besagten Daten entsprechenden Schreibspannung, wobei die in der Karte erfaßte Schreibspannung vom besagten Endgerät kommt.

2. Verfahren nach Anspruch 1, dadurch gekennzeichnet, daß es außerdem den Schritt des Sperrens der Karte, wenn die Gegenwart der Schreibspannung nicht periodisch erfaßt wird, umfaßt.

3. Verfahren nach Anspruch 1 oder 2, dadurch gekennzeichnet, daß die besagte Erfassung des Vorhandenseins einer Schreibspannung durch einen Zähler realisiert wird, wobei der besagte Zähler durch die besagte Schreibspannung auf null rückgesetzt wird.

4. Verfahren nach einem der Ansprüche 1 bis 3, dadurch gekennzeichnet, daß die besagte mindestens eine Stelle zufallsmäßig gewählt wird.

5. Schutzvorrichtung gegen das unberechtigte Sperren des Beschreibens gewisser Speicherzonen einer Mikroprozessorkarte, die in einem Netz mit mindestens einem Verwaltungszentrum (2) und mindestens einem mit diesem Verwaltungszentrum verbundenen Endgerät (3) verwendet wird, wobei das besagte Endgerät einen Mikroprozessorkartenleser umfaßt, wobei die Vorrichtung mindestens das besagte Verwaltungszentrum (2), mindestens das besagte mit diesem Verwaltungszentrum verbundene Endgerät (3) umfaßt, wobei das besagte Endgerät den besagten Mikroprozessorkartenleser und mindestens die besagte Mikroprozessorkarte umfaßt, dadurch gekennzeichnet, daß
das Verwaltungszentrum Mittel (2') zur periodischen Erzeugung einer in die Karte einzuschreibenden Information und Mittel zur Übertragung der besagten Information umfaßt, wobei das besagte Endgerät Mittel zur Erzeugung einer Schreibspannung umfaßt,
wobei die besagte Karte Mittel zur periodischen Erfassung (6) der zum Einschreiben der besagten Daten benutzten Schreibspannung umfaßt.

6. Vorrichtung nach Anspruch 5, dadurch gekennzeichnet, daß die besagte Karte außerdem mit den Erfassungsmitteln verbundene Mittel zum Sperren der besagten Karte umfaßt.

7. Vorrichtung nach Anspruch 6, dadurch gekennzeichnet, daß die besagten Sperrmittel einen in der Speiseschaltung des Mikroprozessors der besagten Karte zwischengeschalteten Anschluß umfassen.

8. Vorrichtung nach einem der Ansprüche 5 bis 7, dadurch gekennzeichnet, daß die besagten Erfassungsmittel einen Zähler (6) umfassen, dessen Eingang zum Rücksetzen auf null die Schreibspannung der Karte (8) empfängt.

9. Vorrichtung nach Anspruch 8, dadurch gekennzeichnet, daß der besagte Zähler durch in der Karte entnommene Taktsignale gespeist wird.

10. Vorrichtung nach einem der Ansprüche 5 bis 9, dadurch gekennzeichnet, daß das besagte Endgerät einen Empfänger und einen Gebührenfernsehdecodierer umfaßt.

## Claims

1. Process for protecting against the unauthorized write disabling of certain memory areas of a microprocessor card used in a network including at least one management centre (2) and at least one terminal (3) linked to this management centre, the said terminal including a smart card reader, characterized in that it comprises the steps:
- of periodically sending any data item to be imprinted at at least one location of the memory of the card,
- of detecting the periodic presence of the write voltage corresponding to the said data item, the write voltage detected in the card originating from the said terminal.

2. Process according to Claim 1, characterized in that it furthermore comprises the step of disabling the card in the event that the presence of the write voltage is not detected periodically.

3. Process according to one of Claims 1 or 2, characterized in that the said detection of the presence of a write voltage is carried out by a counter, the said counter being reset to zero by the said write voltage.

4. Process according to one of Claims 1 to 3, characterized in that the said at least one location is chosen randomly.

5. Device for protecting against the unauthorized write disabling of certain memory areas of a microprocessor card used in a network including at least one management centre (2) and at least one terminal (3) linked to this management centre, the said terminal including a microprocessor card reader, the device comprising at least the said management centre (2), at least the said terminal (3) linked to this management centre, the said terminal including the said microprocessor card reader, and at least the said microprocessor card, characterized in that:
the management centre includes means (2') for periodically producing an information item to be imprinted into the card, as well as means for transmitting the said information item,
the said terminal comprising means for producing a write voltage,
the said card comprising means (6) for periodically detecting the write voltage used to imprint the said data item.

6. Device according to Claim 5, characterized in that the said card furthermore comprises means for disabling the said card, which are linked to the detecting means.

7. Device according to Claim 6, characterized in that the said disabling means include a gate interposed in the supply circuit of the microprocessor of the said card.

8. Device according to one of Claims 5 to 7, characterized in that the said detecting means include a counter (7) whose reset-to-zero input receives the write voltage of the card (8).

9. Device according to Claim 8, characterized in that the said counter is supplied with clock signals extracted from the card.

10. Device according to one of Claims 5 to 9, characterized in that the said terminal includes a receiver and a decoder for pay television.
